# EUROPEAN PATENT APPLICATION

(11) **EP 2 434 843 A1**
(43) Date of publication of application: **28.03.2012**
(21) Application number: 10777632.0
(22) Date of filing: 09.04.2010
(51) Int. Cl.: H05B 41/24, H05B 41/18, H05B 41/282

(54) **HIGH-VOLTAGE DISCHARGE LAMP LIGHTING APPARATUS**

(30) Priority: 21.05.2009 JP 2009122844
(71) Applicant: Iwasaki Electric Co., Ltd, Tokyo 103-0002 (JP)
(72) Inventor: KOBAYASHI Masayuki, Gyoda-shi Saitama 361-8505 (JP); NISHIZAWA Yoshio, Gyoda-shi Saitama 361-8505 (JP)
(74) Representative: Leinweber & Zimmermann
(86) International application number: PCT/JP2010/056437
(87) International publication number: WO 2010/134397

(57) **Abstract**

The present invention provides a ballast for a high pressure discharge lamp including a driving circuit for supplying an alternating power to a high pressure discharge lamp. In the ballast of the present invention, the high pressure discharge lamp includes: a bulb; and a startup light source disposed in a vicinity of the bulb and assisting ignition of the bulb. The startup light source has a pair of electrodes which are capacitively coupled. The driving circuit includes: a bridge unit for inverting a lamp current; a current regulator unit for regulating the lamp current; and an igniter unit for generating an ignition voltage. At the ignition, a voltage containing a frequency component higher than a driving frequency during a steady driving of the bulb is applied to the startup light source.

## Description

### TECHNICAL FIELD

The present invention relates to a ballast for a high pressure discharge lamp for driving a high pressure discharge lamp.

### BACKGROUND ART

Conventionally, a startup light source for assisting ignition of a high pressure discharge lamp has been known (for example. Patent document 1). This document describes a high pressure discharge lamp including a bulb serving as a main light source and an auxiliary startup light source. The startup light source includes a pair of electrodes. One of the pair of electrodes of the startup light source is an inner electrode, and the other is an outer electrode. The electrodes are capacitively coupled. Application of a high voltage therebetween causes electrical breakdown, and a glow discharge is initiated, generating ultraviolet radiation. The ultraviolet radiation excites an ignition gas in the bulb. Thereby, the high pressure discharge lamp is ready to ignite.

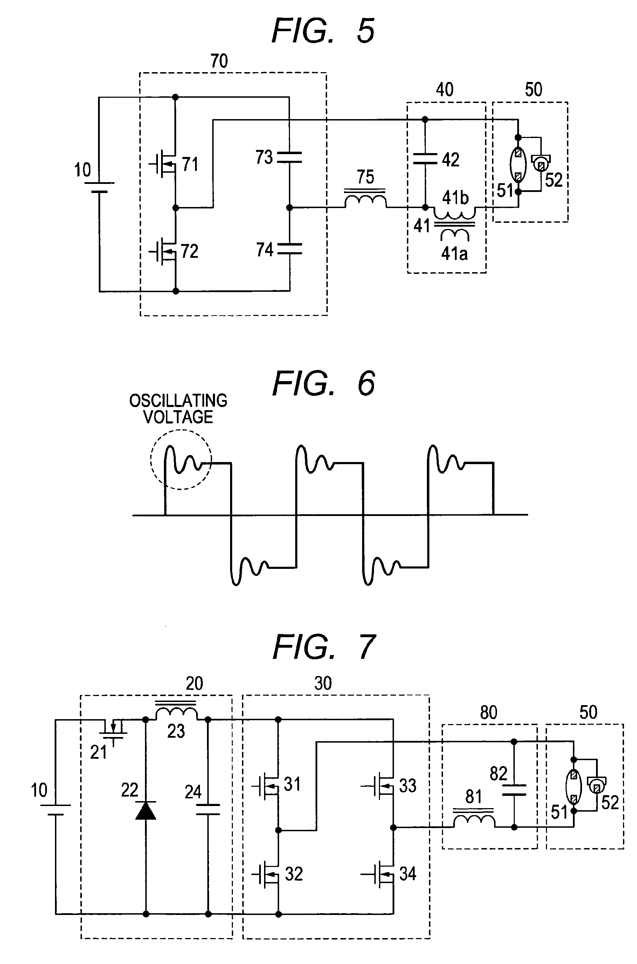

Fig. 7 shows a conventional ballast for a high pressure discharge lamp. In the diagram, a high pressure discharge lamp 50 includes a bulb 51 and a startup light source 52. The ballast includes a step-down chopper circuit 20 , a full-bridge circuit 30 , and a resonant circuit 80.
During the steady driving of the bulb 51, the step-down chopper circuit 20 controls a current flowing through the bulb 51, and the full-bridge circuit 30 inverts the alternating waveform of the current, and the alternating current of a relatively low frequency (for example, approximately 50 to 400 Hz) is supplied to the bulb 51.
At the ignition of the bulb 51, the full-bridge circuit 30 is driven at a frequency in proximity to a resonance frequency of the resonant circuit 80 or the resonance frequency divided by an odd number, and a high voltage of several kV is generated in the resonant circuit 80. This high voltage causes the startup light source 52 to emit light, and the ultraviolet irradiation and the high voltage cause the bulb 51 to ignite.

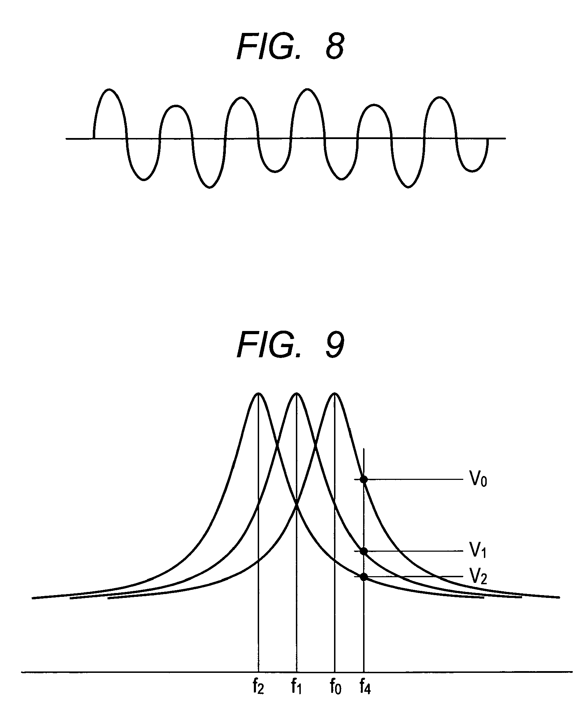

Fig. 8 shows a waveform of the voltage applied to the startup light source 52 in the above-described example. The waveform in the chart is of a case where the driving frequency of the full-bridge circuit 30 is 1/3 of the resonance frequency of an inductor 81 and a capacitor 82.

Here, the inductor 81 used in the resonant circuit 80 greatly varies (i.e. , the inductance thereof varies) in comparison with the other circuit elements. Accordingly, the resonance frequency of the resonant circuit 80 also greatly varies. As shown in Fig. 9, at the ignition, even if the operating frequency of the full-bridge circuit 30 is constant, the voltage generated in the resonant circuit 80 greatly varies as shown from V0, V1 to V2. For this reason, in a conventional example (for example, Patent document 2), at the ignition of the bulb 51, the voltage generated in the resonant circuit 80 is detected while the operating frequency of the full-bridge circuit 30 is being finely changed. The result is fed back to a control circuit (not shown). Then, the operating frequency of the full-bridge circuit 30 is tuned so as to optimize the voltage generated in the resonant circuit 80.

### PRIOR ART DOCUMENTS

### PATENT DOCUMENTS

Patent Document 1: Japanese Patent Application Publication No. H1-134848
Patent Document 2: Published Japanese Translation of PCT International Application No. 2005-520294

### SUMMARY OF INVENTION

### TECHNICAL PROBLEMS

In the ballast for high pressure discharge lamp of conventional example (Fig. 7), the resonant circuit 80 including the inductor 81 and the capacitor 82 is operated substantially in a resonating state. Thus, a high voltage is applied to the inductor 81 and the capacitor 82, and a large current flows therethrough. For this reason, the inductor 81 has to have a large core size so as to prevent saturation. In addition, the capacitor 82 has to withstand the high voltage, and accordingly multiple capacitors are connected in series, for example.
Moreover, the high voltage generated by the resonant circuit 80 is large in energy, creepage distance and clearance distance must be designed so long as to prevent electrical breakdown in the ballast for high pressure discharge lamp and also to prevent fire accident. This results in a problem of increased ballast size.

Further, a feedback circuit and the like need to be provided to tune the operating frequency of the full-bridge circuit 30 in the conventional example as described above. The conventional example has a problem that the ballast configuration is complicated and costly.
Therefore, in a high pressure discharge lamp ballast for driving a high pressure discharge lamp using a startup light source, an object is to provide the ballast having a small and simple configuration.

### SOLUTION TO PROBLEMS

The present invention provides a ballast for a high pressure discharge lamp including a driving circuit for supplying an alternating power to a high pressure discharge lamp (50). In the ballast of the present invention, the high pressure discharge lamp includes: a bulb (51); and a startup light source (52) disposed in a vicinity of the bulb and assisting ignition of the bulb. The startup light source has a pair of electrodes which are capacitively coupled. The driving circuit includes: a bridge unit (30, 70) for inverting a lamp current; a current regulator unit (20, 75) for regulating the lamp current; and an igniter unit (40) for generating an ignition voltage. At the ignition, a voltage containing a frequency component higher than a driving frequency during a steady driving of the bulb is applied to the startup light source.

Herein, the startup light source is connected in parallel to the bulb. The igniter unit includes a transformer (41) and a capacitor (42). The transformer is connected in series to the high pressure discharge lamp. The capacitor is connected in parallel to a series circuit of the transformer and the high pressure discharge lamp.
Furthermore, the bridge unit is a full-bridge circuit (30). An inductor (60) is connected between the bridge unit and the igniter unit.

### BRIEF DESCRIPTION OF DRAWINGS

[Fig. 1] Fig. 1 is a diagram showing a ballast for high pressure discharge lamp according to a first embodiment of the present invention.
[Fig. 2] Fig. 2 is a chart for explaining the first embodiment of the present invention.
[Fig. 3] Fig. 3 is a diagram showing a ballast for high pressure discharge lamp according to a second embodiment of the present invention.
[Fig. 4] Fig. 4 is a chart for explaining the second embodiment of the present invention.
[Fig. 5] Fig. 5 is a diagram showing a ballast for high pressure discharge lamp according to third and fourth embodiments of the present invention.
[Fig. 6] Fig. 6 is a chart for explaining the third embodiment of the present invention.
[Fig. 7] Fig. 7 is a diagram showing a conventional ballast for high pressure discharge lamp.
[Fig. 8] Fig. 8 is a chart for explaining the conventional example.
[Fig. 9] Fig. 9 is a chart for explaining the conventional example.

### BEST MODES FOR CARRYING OUT THE INVENTION

Incidentally, in the conventional technique, to ensure the ignition operation of the high pressure discharge lamp 50 (i.e., the bulb 51 and the startup light source 52), a high voltage is applied thereto. However, the amount of ultraviolet radiation generated from the startup light source 52 depends on the current flowing therethrough. Hence, it is important not to increase the voltage to be applied but to increase the current flowing. Specifically, since the startup light source 52 is capacitive, the current can be increased by increasing the frequency of the voltage to be applied (the current flowing).

A ballast for high pressure discharge lamp generally includes: a bridge unit for inverting a lamp current; a current regulator unit for regulating the lamp current; and an igniter unit for generating a ignition voltage. At the ignition, these units are configured to apply to a startup light source 52 a voltage containing a frequency component higher than a driving frequency during the steady driving of a bulb 51.

### Embodiment 1.

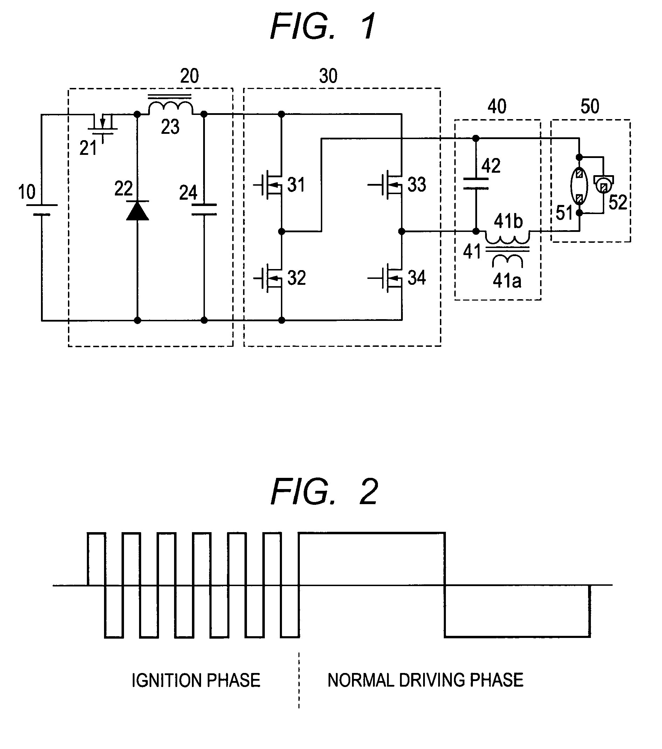

Fig. 1 shows a circuit configuration diagram of a ballast for high pressure discharge lamp according to a first embodiment. The ballast in the diagram includes a step-down chopper circuit 20 as a current regulator unit, a full-bridge circuit 30 as a bridge unit, and an igniter 40.
A driver (not shown) drives the full-bridge circuit 30 at several ten Hz to several hundred Hz during normal driving phase, while driving at several hundred Hz to several ten kHz at the ignition. To put it differently, the voltage applied to a startup light source 52 has a waveform shown in Fig. 2.

At the ignition, an output voltage from an igniter 40 causes the startup light source 52 to be electrically broken down. Subsequently, a glow discharge in the startup light source 52 is continued by a voltage supplied from the bridge circuit 30. Once the startup light source 52 is electrically broken down, a pair of electrodes in the startup light source 52 are brought into a capacitively coupled state. Hence, the higher the frequency component of the voltage supplied from the bridge circuit 30, the more smoothly a current flows through the startup light source 52, and the more efficiently ultraviolet radiation is generated. The larger the amount of the ultraviolet radiation generated from the startup light source 52, the more an ignition gas in a bulb 51 is excited. Thus, even a relatively low ignition voltage can bring the bulb 51 into the ignition state.

Since the bulb 51 is made ready to ignite by the efficient ultraviolet irradiation, the output voltage generated by the igniter circuit 40 may be smaller in energy than an ignition voltage generated by a resonant circuit in the conventional example (for example, the resonant circuit 80 in Fig. 8). In other words, advantageously, the size of the igniter circuit can be made smaller.

### Embodiment 2.

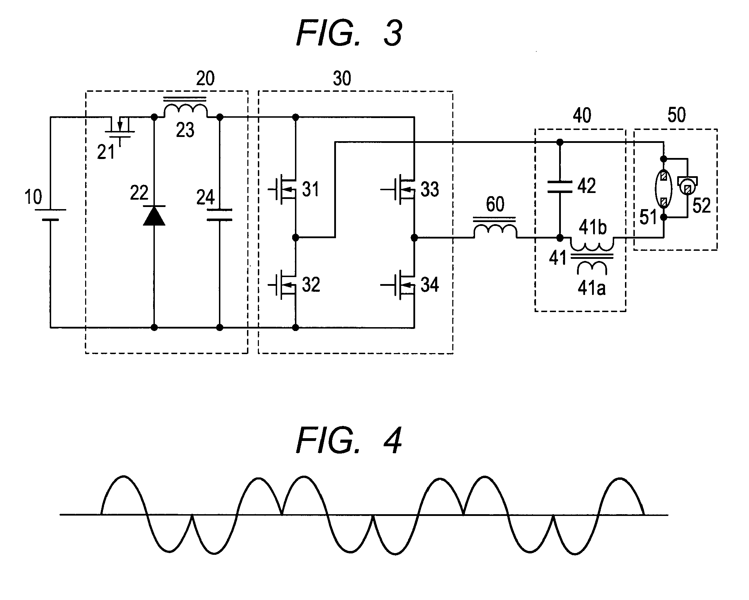

Fig. 3 shows a circuit configuration diagram of a second embodiment. A ballast for high pressure discharge lamp in the diagram includes a step-down chopper 20 as a current regulator unit, a full-bridge circuit 30 as a bridge unit, an inductor 60, and an igniter 40.
At the startup, a driver (unillustrated) drives the full-bridge circuit 30 at a frequency in proximity to the resonance frequency of the inductor 60 and a capacitor 42 divided by an even number. Fig. 4 shows a voltage applied to a startup light source 52 at the ignition. The waveform in the chart is of a case where the driving frequency of the full-bridge circuit 30 is 1/4 of the resonance frequency of the inductor 60 and the capacitor 42.

Since the inductor 60 and the capacitor 42 oscillate at the resonance frequency, a voltage containing a frequency component higher than the operating frequency of the full-bridge circuit 30 is applied to the startup light source 52. Thereby, a large amount of current flows through the startup light source 52 in the capacitively coupled state, and ultraviolet radiation emission is achieved efficiently.

In this embodiment, since the voltage generated in and the current through the inductor 60 and the capacitor 42 are small, small and inexpensive parts can be used for these.
Moreover, even if the value of the inductor 60 varies, the voltage to be generated varies little because the driving frequency of the full-bridge circuit 30 is far different from the resonance frequency of the inductor 60 and the capacitor 42. Hence, it is not necessary to finely tune the operating frequency of the full-bridge circuit 30, and the control configuration can be advantageously simplified.

### Embodiment 3.

Fig. 5 shows a circuit configuration diagram of a third embodiment. A ballast for high pressure discharge lamp in the diagram includes a half-bridge circuit 70 as a bridge unit, an inductor 75 as a current regulator unit, and an igniter circuit 40.
During the normal driving of a bulb 51, when a switching element 71 is turned ON-OFF at a high frequency with a switching element 72 in the OFF state, a current flows from the bulb 51 toward a coil 41b of a transformer 41. Meanwhile, when the switching element 72 is turned ON-OFF at a high frequency with the switching element 71 in the OFF state, a current flows from the coil 41b toward the bulb 51. The bulb 51 is AC-driven at a frequency at which the switching elements 71 and 72 are alternately operated.

At the ignition of the bulb 51, a driver (not shown) drives the switching elements 71 and 72 at a frequency in proximity to the resonance frequency of the inductor 75 and a capacitor 42 divided by an odd number. Immediately after the operation is switched from the ON state of the switching element 71 to the ON state of the switching element 72, or immediately after the operation is switched from the ON state of the switching element 72 to the ON state of the switching element 71, the inductor 75 and the capacitor 42 generate an oscillating voltage.

As a result, a square wave voltage on which a high frequency component is superimposed as shown in Fig. 6 is applied to a startup light source 52. By the high frequency component, a large amount of current flows through the capacitive startup light source, and ultraviolet radiation emission is achieved efficiently.
When the operation is switched between the switching elements 71 and 72, the oscillating voltage generated by the inductor 75 and the capacitor 42 is not a high voltage unlike the case of the resonant circuit in the conventional example. Thus, both the inductor 75 and the capacitor 42 may be small parts.
Moreover, if the frequency at which the switching elements 71 and 72 are alternately operated at the ignition of the bulb 51 is higher than that during the steady driving phase, a higher frequency component can be applied to the startup light source 52, and the ignition operation can be facilitated.

### Embodiment 4.

The circuit configuration of this embodiment is the same as that of Embodiment 3 in Fig. 5, except for the operations of the switching elements 71 and 72.
At the ignition of the bulb 51, an unillustrated driver drives the switching elements 71 and 72 at a frequency in proximity to the resonance frequency of the inductor 75 and the capacitor 42 divided by an even number. The switching elements 71 and 72 are turned ON-OFF alternately. The voltage applied to the startup light source 52 is the same as that in Fig. 4 of Embodiment 2.
Although the inductor 75 and the capacitor 42 generate an oscillating voltage of a high frequency similarly to Embodiment 2, the voltage is small, and both the parts may be advantageously small.

With the above configuration, a ballast for high pressure discharge lamp can be produced with a simple circuit under simple control using small and inexpensive parts.

### EXPLANATION OF REFERENCE NUMERALS

- 10.: DC power supply
- 20.: step-down chopper circuit
- 30.: full-bridge circuit
- 40.: igniter circuit
- 50.: high pressure discharge lamp
- 51.: bulb
- 52.: startup light source
- 60.: inductor
- 70.: half-bridge circuit
- 75.: inductor

## Claims

1. A ballast for a high pressure discharge lamp, the ballast comprising a driving circuit for supplying an alternating power to a high pressure discharge lamp (50), wherein
the high pressure discharge lamp includes:
a bulb (51); and
a startup light source (52) disposed in a vicinity of the bulb and assisting ignition of the bulb,
the startup light source has a pair of electrodes which are capacitively coupled,
the driving circuit includes:
a bridge unit (30, 70) for inverting a lamp current;
a current regulator unit (20, 75) for regulating the lamp current; and
an igniter unit (40) for generating an ignition voltage, and
at the ignition, a voltage containing a frequency component higher than a driving frequency during a steady driving of the bulb is applied to the startup light source.

2. The ballast for the high pressure discharge lamp according to claim 1, wherein
the startup light source is connected in parallel to the bulb,
the igniter unit includes a transformer (41) and a capacitor (42),
the transformer is connected in series to the high pressure discharge lamp, and
the capacitor is connected in parallel to a series circuit of the transformer and the high pressure discharge lamp.

3. The ballast for the high pressure discharge lamp according to claim 2, comprising:
a full-bridge circuit (30) as the bridge unit; and
an inductor (60) connected between the bridge unit and the igniter unit.
